# EUROPEAN PATENT APPLICATION

(11) **EP 4 653 071 A1**
(43) Date of publication of application: **26.11.2025**
(21) Application number: 24461576.1
(22) Date of filing: 23.05.2024
(51) Int. Cl.: B01D 29/21, B01D 35/147, B01D 35/153, B01D 35/157

(54) **FILTER VALVE ASSEMBLY**

(71) Applicant: Collins Engine Nozzles, Inc., West Des Moines, IA 50265 (US)
(72) Inventor: JEDLINSKI, Marek Pawel, 51-317 Wroclaw (PL); BUJEWICZ, Maciej, 51-317 Wroclaw (PL)
(74) Representative: Dehns

(57) **Abstract**

A filter assembly comprising: a manifold (1) having a fluid inlet (2) and a fluid outlet (3), a filter housing (4) having a filter medium (6) provided therein, the filter medium defining an inner filter chamber (7) and defining an outer filter chamber (8) between the filter medium and the filter housing, the filter housing being removably attached to the manifold so as to provide a fluid flow path from the inlet into the inner filter chamber via a supply channel (11), through the filter medium into the outer chamber and out of the outlet; characterised by the filter assembly further comprising a bypass valve assembly forming a bypass channel (13) from the supply channel (11) that bypasses flow through the filter medium, the bypass valve assembly comprising one or more openings (200) in a wall of the supply chamber and a corresponding one or more flaps (202) associated with respective openings (200), the one or more flaps (202) being configured to move from a default closed position over the respective opening (200) to close the opening, to an open position relative to the respective opening in which fluid can flow from the supply channel (11) via the opening (200), the flaps moveable from the closed to the open position in response to a pressure differential across the flap exceeding a predetermined value, the flaps further configured to return from the open to the closed position when the pressure differential is below the predetermined value.

## Description

### TECHNICAL FIELD

The present disclosure is concerned with a valve assembly for a filter assembly such as, but not limited to, filters for fuel or oil or lubricant in machines or vehicles, e.g. a fuel filter in a vehicle or an aircraft.

### BACKGROUND

Filters are provided in various applications to filter fluid flowing along a fluid flow path in order, for example, to remove particles or contaminants from the fluid. The present disclosure is concerned with the type of filter having a fluid inlet and a fluid outlet and a filter path between the inlet and the outlet, wherein the filter path passes through a filter medium arranged to remove the material to be filtered from the fluid before it arrives at the outlet. Such filters find use in e.g. vehicle fuel systems, where fuel is drawn from a reservoir by a pump and delivered to the engine. Filters are provided in the flow path to remove any particulate matter or debris and to ensure that the fuel reaching the engine is as clean as possible to avoid damage to the engine and permit optimal engine performance. Such filter assemblies may comprise a manifold with an inlet and outlet for connection to the fuel lines and a filter material. This may be provided in a filter cartridge removably attached to the manifold. Filters are also used to filter lubricant fluid e.g. oil and whilst the assembly of the disclosure is described in relation to fuel supply systems, this is by way of example only and the principles may apply equally to filters for lubricant or other fluids. In vehicles, and particularly in aircraft, the effectiveness and reliability of the filters is important for performance, efficiency and safety.

Over time, the filter material may become clogged presenting an impedance to the flow of fluid through the filter. To avoid the engine being cut off from the fuel supply when the filter medium is clogged, most fuel supply systems will provide a way to bypass the filter medium in the event of it becoming clogged since it is important for the engine to receive some fuel, even if it contains debris, rather than no fuel at all. The bypass system will allow fuel to flow to the engine until such time that the filter material can be replaced e.g. by removing and replacing the filter cartridge.

Current filter bypass systems tend to be large and complex and this adds considerably to the cost, weight and size of the filter assembly.

Further, as mentioned above, when the filter medium becomes clogged or has exceeded its useful or permitted life, it needs to be removed and replaced. Conventionally, this requires the fuel system, and therefore the engine, to be switched off while the filter medium is removed, leading to undesirable downtime. More recently, shut-off systems have been incorporated into filters to close off the flow path when the filter medium is removed, that allows a filter to be removed and replaced without the need to shut-off the entire fuel system, and to avoid leakage during removal of the filter cartridge.

### SUMMARY

The assembly according to this disclosure is a filter assembly comprising a bypass valve and a shut-off valve that are integrated inside the housing or manifold of the filter assembly and that is automatically actuated. A shut-off assembly may also be incorporated into the filter assembly. Any known shut-off assembly is feasible. The bypass valve of this disclosure may also be incorporated into a filter assembly without a shut-off valve assembly.

According to an aspect of the disclosure, there is provided a filter assembly comprising: a manifold having a fluid inlet and a fluid outlet, a filter housing having a filter medium provided therein, the filter medium defining an inner filter chamber and defining an outer filter chamber between the filter medium and the filter housing, the filter housing being removably attached to the manifold so as to provide a fluid flow path from the inlet into the inner filter chamber via a supply channel, through the filter medium into the outer chamber and out of the outlet; characterised by the filter assembly further comprising a bypass valve assembly forming a bypass channel from the supply channel that bypasses flow through the filter medium, the bypass valve assembly comprising one or more openings in a wall of the supply chamber and a corresponding one or more flaps associated with respective openings, the one or more flaps being configured to move from a default closed position over the respective opening to close the opening, to an open position relative to the respective opening in which fluid can flow from the supply channel via the opening, the flaps moveable from the closed to the open position in response to a pressure differential across the flap exceeding a predetermined value, the flaps further configured to return from the open to the closed position when the pressure differential is below the predetermined value.

The filter assembly may also include a shut-off valve assembly.

Also disclosed is a fuel filter and a method of filtering fluid.

Preferred embodiments of the invention will now be described in more detail, by way of example only, with reference to the drawings.

### BRIEF DESCRIPTION OF THE DRAWINGS

Figure 1 is a perspective view of a filter assembly.
Figure 2 shows a sectional view of an assembly according to this disclosure.
Figure 3 shows the flow through the filter assembly in normal operation.
Figure 4 shows the flow through the filter assembly in bypass operation.
Figure 5A is a close-up view of the bypass valve assembly of Figs. 2 to 4 in an open state.
Figure 5B is a close-up view of the bypass valve assembly of Figs. 2 to 4 in a closed state.
Figures 6A, 6B and 6C show operation of an optional shut off valve function.
Figure 7 shows the seals for the shut off function in close-up.

### DETAILED DESCRIPTION

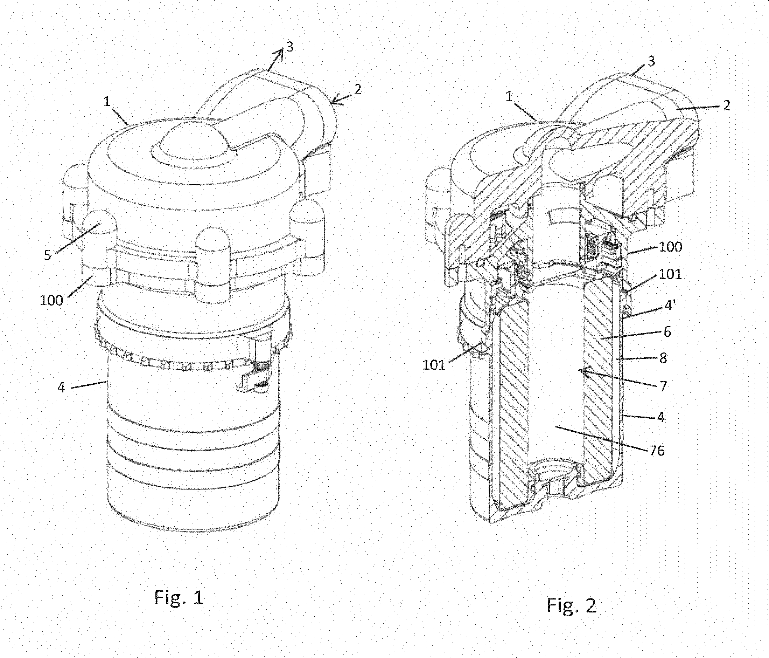

Figure 1 shows a filter assembly such as those used in fuel systems or the like. Such filters may be placed between the fuel reservoir and the fuel pump and/or between the pump and the engine, to remove debris, particulate matter etc. from the fuel before it reaches the engine. The outer shape and structure of the filter is as is known in the field and is designed to fit in a fuel supply system of the vehicle/aircraft etc. The aim of the present disclosure is to provide a by-pass and shut off system that can be integrated into such a filter assembly without changing the design or the envelope of the exterior of the assembly.

The filter assembly includes a filter manifold 1 having a fluid inlet 2 and a fluid outlet 3. The inlet 2 is configured to be connected to a fluid line from the reservoir or pump (not shown) supplying fluid/fuel to be filtered. The following description will refer to a fuel filter, but it should be understood that the fluid could be other than fuel and reference to fuel is by way of example only.

The outlet 3 is configured to be connected to a fluid line for providing the filtered fluid to the pump (if the filter is between the reservoir and the pump) or to the end user of the fluid e.g. the engine (if the filter is between the pump and the engine). The manifold 1 is attached to a filter canister or bowl 4 by a connector or adapter 100, which houses the valve assembly described further below, and fasteners 5. As seen in Fig. 2, a threaded connector 101 is provided between the connector and the bowl 4. As will be described further below with reference to the other drawings, fluid provided to the filter inlet passes from the manifold 1 into the filter canister or bowl 4. The filter bowl 4 contains a filter medium 6 which may be e.g. in the form of a cartridge fitted into the bowl. The filter medium 6 which may be e.g. paper or other known filter material is formed to define an inner chamber 7. An outer chamber 8 is defined between the filter medium 6 and the inner wall 4' of the filter bowl 4. Fluid from the inlet, passing into the filter, is directed into the inner chamber 7. Due to the pressure of the pump and the build-up of pressure in the inner chamber the fluid is forced outwards through the filter medium 6 into the outer chamber 8 and is then forced up to and out from the outlet 3. This is known and standard for such filter assemblies.

As mentioned above, problems can arise when the filter medium 6 becomes clogged or defective such that the fluid in the inner chamber 7 is not able to pass through the filter medium into the outer chamber and to the outlet. The fluid (fuel) would then not reach the engine.

According to this disclosure, a bypass valve assembly is provided to regulate fluid flow when it cannot pass through the filter medium. The bypass valve assembly is integrated into and inside the manifold of the filter assembly.

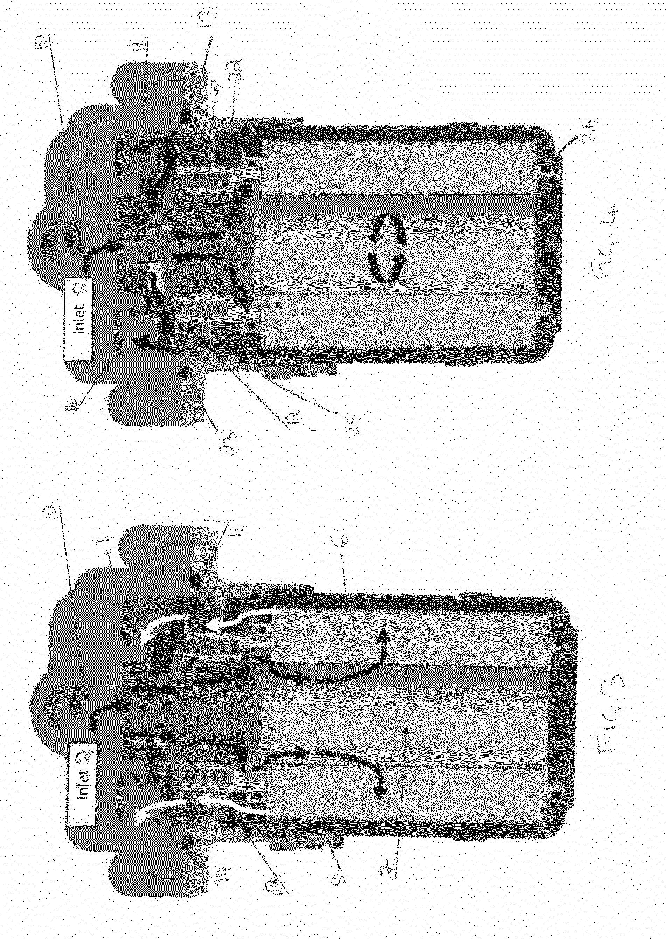

In normal operation, the fluid e.g. fuel flows into the inlet 2 in the manifold 1, as best seen by the arrows in Fig. 3. The fuel flows into a supply chamber 10 and along a supply channel 11, from where it flows into the inner chamber 7 of the filter. The fuel flows, under pressure of the pump, through the filter medium 6, where debris or contaminants are filtered from the fluid and retained in the filter medium 6. The filtered fluid then flows from the outer chamber 8 to an outlet channel 12 and out of the filter via the outlet chamber 14 and the outlet 3 of the manifold 1.

As mentioned above, the filter can become clogged and will, after a while, need to be removed and replaced. The bypass valve assembly of this disclosure, as described in more detail below, acts to direct the fuel via a bypass channel 13 in the event that the filter becomes clogged, as indicated by an excessive pressure differential between valve control areas (as described further below and due to the pressure in the inner chamber increasing beyond the so-called 'cracking pressure' because the flow through the filter medium is hindered), thus bypassing the filter medium. This ensures that in such an event, fuel will continue to be provided to e.g. the engine even in the event that the filter is not usable. Of course, the output fuel will not be filtered, but some (unfiltered) fuel is preferable to no fuel at all.

The bypass operation will now be described in more detail with reference to Figs. 3, 4, 5A and 5B. In normal operating conditions, as shown in Fig. 3, fluid flows from the inlet 2 through the supply channel 11, through the filter 6 into the outlet channel 12, then out through the outlet 3 into the system. If a shut-off valve is present, (an example of which is described below) this is in its open state.

The bypass valve assembly comprises one or more openings 200 in a wall of the supply channel 11 and a corresponding one or more flaps 202 associated with the respective openings 200. The flaps 202 are configured to be movable between a default, closed position across the respective opening 200, to close the opening and substantially prevent fluid flow therethrough, and an open position relative to the opening such that the opening is open to fluid flow from the supply channel.

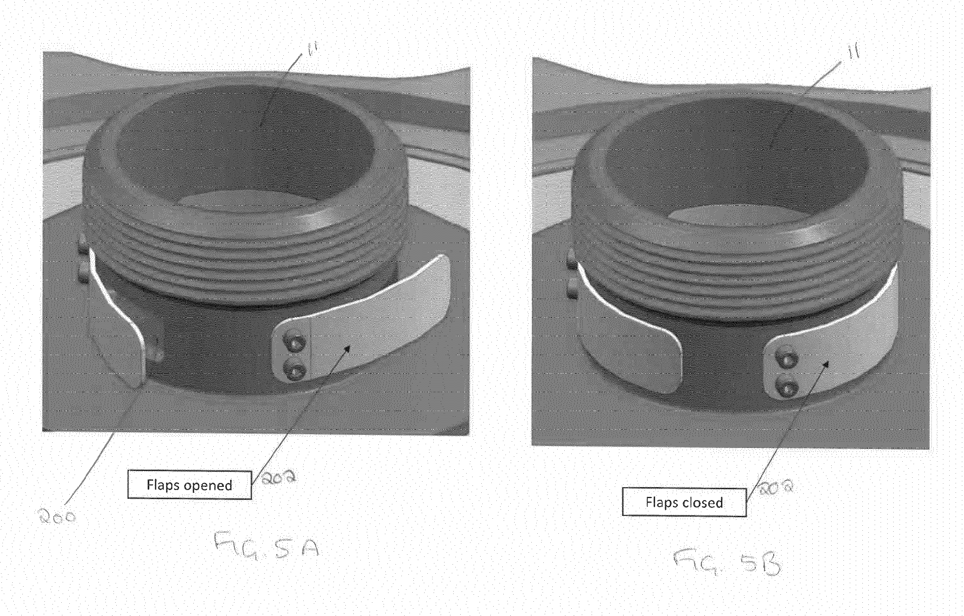

The flaps 202 are configured to open in response to the pressure differential across the supply channel wall exceeding a predetermined threshold. Thus, as seen in Fig. 4, when the filter is clogged, the fluid pressure inside the supply channel builds up and the pressure differential between that pressure and the pressure on the outside of the supply channel wall builds. When this differential exceeds a predetermined threshold, the flaps 202 are forced open relative to their openings 200 and fluid flows from the supply channel through the openings 200 of the bypass valve assembly to the outlet chamber 14 via the bypass channel 13, and then out through the outlet 3. In other words, fuel entering the inlet is thus directed, as shown by the arrows in Fig. 4, from the supply chamber through the bypass channel 13, from where it flows to the outlet chamber and to the outlet 3 without passing through the filter medium 6. The bypass valve openings and flaps can be more clearly seen in the details shown in Figs. 5A and 5B.

When the pressure differential reduces, the flaps return to their default, closed position and the fluid flows through the supply channel into the filter as in Fig. 3.

The flaps 202 and the openings may have different sizes and configurations.

The flaps 202 may be made of a resilient material, and secured at one end to the supply chamber wall at an end of the respective opening, (here formed as an elongate slot), the resiliency of the material e.g. a spring metal, being such as to return the flap to its default, closed position when the pressure differential across the flap is below the predetermined threshold.

It is not necessary that the flaps, in their closed state, provide a complete hermetic seal and some minor leakage may be permitted.

Whilst the bypass valve assembly may have one or more openings and associated flaps, there may be some practical geometric constraints due to the size and configuration of the filter assembly. The larger the area of supply chamber wall taken up by the openings, the weaker the wall and so there is a trade-off between wall strength and bypass flow rate. The example shown has three openings/three flaps around the supply chamber which, in some examples, may result in around 70% of the supply chamber wall formed as openings and 30% solid wall between openings. This is only one example and many variations are possible.

In addition, when the filter medium needs replacing, with known assemblies, the fluid supply needs to be cut off to prevent fluid flowing into the inlet so that the bowl 4 can be disconnected from the manifold without fluid leakage, and replaced with new filter medium and reattached before the fluid flow can be re-started.

The filter assembly may, therefore, also include a shut-off valve assembly that operates to shut off fuel flow through the filter in the event that the filter bowl 4 is removed e.g. for maintenance, so as to prevent fuel leakage. The shut off function shuts off the supply channel and, optionally, may also shut off the outlet chamber.

Various shut-off valve assembly configurations are known. In the example shown, the shut-off valve assembly is located entirely within the envelope of the filter defined by the manifold, the connector and the filter bowl, and comprises a preloaded shut-off valve spring 20 and a shut-off valve piston 22, as will be described below.

The shut-off valve assembly of this example includes the shut-off valve piston 22 mounted within the adapter 100 around the supply channel, the lower end of the piston engaging the filter cartridge. The shut-off spring 20 is biased between the shut-off valve piston 22 and the supply channel. When the filter cartridge is fastened to the adapter 100, the spring 20 is compressed. The piston 22 is provided with a radially extending flange 23 that, in a closed position, abuts against an adapter ring 25 provided around the interior of the adapter 100 at the interface of the adapter and the filter bowl 4. A seal 27, e.g. a lip seal, is provided around the adaptor ring 25 such that when the piston flange 23 abuts against the adapter ring 25 it comes into sealing engagement with the seal 27.

Seals, e.g. O-rings 35, 36 are provided at various locations in the system to prevent leakage of the fluid flowing through the system. One of these seals 36 is provided where the filter medium 6 fits to the bottom of the filter bowl 4.

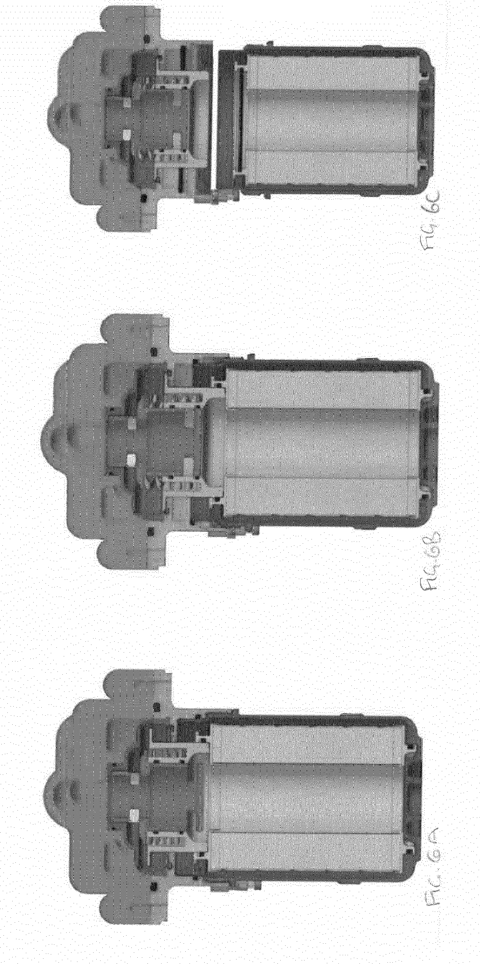

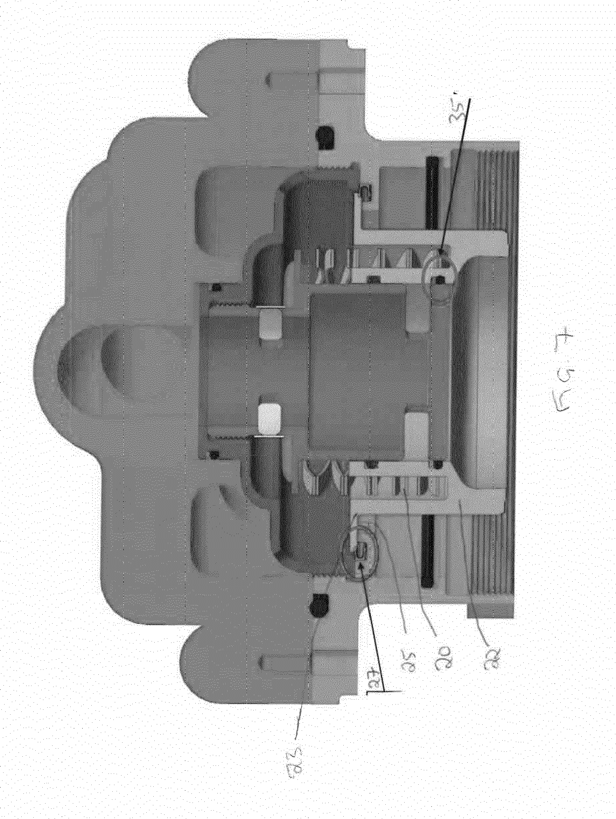

The shut off function of this example is described with reference to Figs. 6A to 6C and 7.

Figure 7 shows in detail valve assembly components that cooperate to provide the shut off function. The shut off valve components may be arranged within the connector around the supply channel 11. The shut off components may include an axially movable shut off valve piston 22, and a shut off valve spring 20 for axially moving the shut off valve piston 22. An inlet seal 26 may be provided between the shut off valve piston 22 and the inlet/supply channel 11. This may be a knife edge seal or O ring seal such as a ring of e.g. Teflon or the like to provide axial sealing. An outlet seal 29 is provided between the shut off valve piston 22 and the adapter ring. In the example shown, this is a lip seal and provides axial sealing. Other types of seal can also be envisaged to provide the required axial sealing at the inlet and outlet. What is important is then when the shut off valve is in the closed position (as described further below) both the inlet and outlet are sealed to avoid any fluid leakage at either the inlet or the outlet.

Fig. 6A shows the manifold 1, connector/valve housing 100 and filter bowl 4 assembled as described above.

To remove the filter bowl 4, it may be unscrewed from the connector 100 using the thread 101. The filter bowl 4 may also be secured to the connector by a latch (not shown) which is also opened to release the bowl. Fig. 6B shows the assembly as the bowl is being unscrewed. Fig. 6C shows the filter bowl removed from the manifold 1.

The filter bowl 4 contains the filter medium 6 which is in the form of a cylinder with a top part provided with a cap ring 125 provided to add rigidity to the filter medium 6 for attachment of the flow paths and valve assembly parts. In normal operation, when the filter bowl 4 is attached to the manifold 1 via the connector 100 (Fig. 6A), the shut off valve spring 20 is compressed by the attachment of the filter bowl 4 such that the flange 23 of the piston 22 is held out of engagement with the adaptor ring 25. The inlet 26 and outlet axial seals 29 are therefore not in sealing engagement with the piston and the flange 23 and do not, therefore, prevent flow of the fluid from the supply channel into the filter or from the filter to the outlet.

As the filter bowl starts to be unscrewed from the connector (Fig. 6B) this releases the force acting on the valve spring 20 via the piston 22 being pressed by contact with the filter bowl 4 and as the spring 20 expands it forces the piston axially downwards bringing the flange into engagement with the adaptor ring and the outlet seal 29. At the same time, the piston moves to sealingly engage with the inlet seals 26 to thus prevent flow of fluid at the inlet and outlet. Once the shut off valve piston 22 is in a position that the inlet and outlet seals are in proper sealing engagement, the filter bowl 4 can be fully detached (Fig. 6C) without the risk of fluid leakage from the manifold/connector. The geometry of the shut off valve parts and the design of the valve spring are such that the valve in its shut off function will be in its fully sealed closed position before the filter bowl 4 is disconnected. The flange 23 of the piston in engagement with the adaptor ring defines a chamber 50 where the spring 22 is located to protect the spring from fluid in the system and from debris.

The outlet seal 29 being provided on the adaptor ring 25 provides the required outlet sealing for the shut off function and also secures the piston 22 against falling out of the connector/manifold after the bowl 4 is removed.

The bypass valve assembly of this disclosure can be located inside existing manifold designs and thus does not increase the envelope of the filter assembly. Further, the bypass valve assembly is relatively simple, small and lightweight and enables simple, quick and less frequent maintenance without fuel loss. Further, the failure of any one valve component will not cause the loss of filter function. The valve assembly is reliable and durable thus reducing the costs and time of maintenance.

## Claims

1. A filter assembly comprising:
a manifold (1) having a fluid inlet (2) and a fluid outlet (3),
a filter housing (4) having a filter medium (6) provided therein, the filter medium defining an inner filter chamber (7) and defining an outer filter chamber (8) between the filter medium and the filter housing, the filter housing being removably attached to the manifold so as to provide a fluid flow path from the inlet into the inner filter chamber via a supply channel (11), through the filter medium into the outer chamber and out of the outlet; **characterised by** the filter assembly further comprising a bypass valve assembly forming a bypass channel (13) from the supply channel (11) that bypasses flow through the filter medium, the bypass valve assembly comprising one or more openings (200) in a wall of the supply chamber and a corresponding one or more flaps (202) associated with respective openings (200), the one or more flaps (202) being configured to move from a default closed position over the respective opening (200) to close the opening, to an open position relative to the respective opening in which fluid can flow from the supply channel (11) via the opening (200), the flaps moveable from the closed to the open position in response to a pressure differential across the flap exceeding a predetermined value, the flaps further configured to return from the open to the closed position when the pressure differential is below the predetermined value.

2. A filter assembly as claimed in claim 1, wherein the one or more flaps are made of a resilient material.

3. A filter assembly of claim 1 or 2, wherein the flaps are made of metal.

4. A filter assembly as claimed in any preceding claim, wherein the one or more flaps are secured adjacent one side of the respective opening.

5. A filter assembly as claimed in any preceding claim, wherein the openings and the flaps are elongate.

6. A filter assembly as claimed in any preceding claim, further comprising a shut-off valve assembly to prevent fluid flow from the manifold on removale of the filter housing from the manifold.

7. A filter assembly as claimed in claim 6, the shut-off valve assembly comprising a shut off valve piston (22) and a shut off valve spring (20) arranged in engagement with the valve piston to bias the valve piston into a first position, the valve assembly further comprising an adaptor ring (25) located between the shut off valve piston (22) and the filter housing (4) and provided with an annular outlet seal (29), and wherein the shut off valve piston (22) is provided with a radially extending flange (23) and an inner piston wall configured such that as the filter housing is being detached from the manifold, the shut off valve spring expands to move the shut off valve piston to a shut off position whereby the piston flange is in sealing engagement with the adaptor ring and the outlet seal, and the inner piston wall is in sealing engagement with inlet seals (26) such that flow from the fluid inlet and the fluid outlet is shut off from entering the filter housing.

8. The filter assembly of claim 7, wherein the outlet seal (29) is a lip seal.

9. The filter assembly of any preceding claim, further comprising a cap ring (125) mounted to the top of the filter housing (4).

10. The filter assembly of any preceding claim, further comprising a supply chamber (10) between the fluid inlet (2) and the inner filter chamber (7).

11. The filter assembly of any preceding claim, further comprising an outlet chamber (12) between the outer filter chamber (8) and the fluid outlet (3).

12. The filter assembly of any preceding claim, further comprising sealing means between the manifold and the filter housing.

13. A fuel filter arranged between a fuel supply and a fuel application and comprising the filter assembly of any preceding claim, the inlet arranged to be connected to the fuel supply and the outlet arranged to be connected to the fuel application.

14. A method of providing fluid from a fluid source to a fluid application via a filter assembly as claimed in any of claims 1 to 12, comprising providing fluid from the fluid source to the fluid inlet (2), the fluid passing through the filter medium to provide filtered fluid to the fluid application via the fluid outlet (3), and wherein fluid is caused to flow from the inlet to the outlet without passing through the filter medium in response to the pressure differential across the bypass valve assembly one or more flaps (220) exceeding the predetermined value.

15. A method of removing the filter housing (4) from the manifold (1) of the filter assembly as claimed in claim 7 , comprising rotating the filter housing relative to the manifold until the shut-off valve piston is in the shut off position and then detaching the filter housing from the manifold by further rotation of the filter housing relative to the manifold.
